# EUROPEAN PATENT SPECIFICATION

(11) **EP 3 290 461 B1**
(45) Date of publication and mention of the grant of the patent: **17.01.2024**
(21) Application number: 15890785.7
(22) Date of filing: 28.04.2015
(51) Int. Cl.: C08G 73/10, C08L 79/08, C08J 5/18

(54) **POLYIMIDE RESIN AND FILM USING SAME**
POLYIMIDHARZ UND FOLIE DAMIT
RÉSINE DE POLYIMIDE ET FILM UTILISANT CELLE-CI

(43) Date of publication of application: 07.03.2018
(73) Proprietor: Kolon Industries, Inc., Seoul 07793 (KR)
(72) Inventor: JU, Chul Ha, Yongin-si Gyeonggi-do 446-797 (KR); JUNG, Hak Gee, Yongin-si Gyeonggi-do 446-797 (KR); PARK, Hyo Jun, Yongin-si Gyeonggi-do 446-797 (KR)
(74) Representative: Ter Meer Steinmeister & Partner
(86) International application number: PCT/KR2015/004203
(87) International publication number: WO 2016/175344

(56) References cited:
- EP-A1- 2 660 275
- WO-A1-2008/072916
- JP-A- 2007 084 818
- KR-A- 20110 035 057
- KR-A- 20120 078 510
- KR-A- 20130 077 948
- KR-A- 20140 055 387
- US-A1- 2008 044 682
- JIQIANG XIA ET AL: "Linear and networked blends and copolymers of polyimide", JOURNAL OF APPLIED POLYMER SCIENCE, vol. 100, no. 4, 15 May 2006 (2006-05-15), pages 3000-3008, XP055525818, US ISSN: 0021-8995, DOI: 10.1002/app.22991
- WANG J ET AL: "POLYIMIDE FILMS FROM LINEAR AND NETWORK PRECURSORS", JOURNAL OF MATERIALS CHEMISTRY, ROYAL SOCIETY OF CHEMISTRY, GB, vol. 9, no. 3, 1 March 1999 (1999-03-01), pages 655-659, XP000853241, ISSN: 0959-9428, DOI: 10.1039/A806620E

## Description

### Technical Field

The present invention relates to a polyimide resin as defined in claim 1 and a film as defined in claim 6, and more particularly to a polyimide resin and a polyimide film using the same, wherein the polyimide resin is superior in optical properties, thermal stability and mechanical properties and is thus suitable for use in a substrate for a display device.

### Background Art

Typically, a polyimide (PI) film is formed from a polyimide resin. Here, "polyimide resin" refers to a highly heat-resistant resin prepared by subjecting an aromatic dianhydride and an aromatic diamine or an aromatic diisocyanate to solution polymerization to give a polyamic acid derivative, which is then subjected to a ring-closing reaction and dehydration at a high temperature so as to be imidized. In the preparation of the polyimide resin, examples of the aromatic dianhydride may include pyromellitic dianhydride (PMDA), biphenyltetracarboxylic dianhydride (BPDA), etc., and examples of the aromatic diamine may include oxydianiline (ODA), p-phenylenediamine (p-PDA), m-phenylenediamine (m-PDA), methylenedianiline (MDA), bisaminophenylhexafluoropropane (HFDA), etc.

Since a polyimide resin is a very highly heat-resistant resin, which is insoluble and infusible, and is superior in terms of thermal oxidation resistance, heat resistance, radiation resistance, low-temperature characteristics, chemical resistance, it has been utilized in a variety of fields including those of advanced heat-resistant materials, such as automotive materials, aircraft materials, spacecraft materials, etc., and electronic materials such as insulation coating agents, insulation layers, semiconductors, electrode-protecting films for TFT-LCDs, etc. Recently, such a resin is employed for display materials such as optical fibers or liquid crystal alignment layers, and is also used for transparent electrode films, either in a manner in which it is contained along with a conductive filler in the films or in a manner in which it is applied on the surface thereof.

However, a polyimide resin is brown- or yellow-colored, attributable to its high aromatic ring density, and thus has low transmittance in the visible light range. Additionally, it takes on a yellowish color, which decreases light transmittance or increases birefringence, making it difficult to utilize it for optical members.

With the goal of overcoming such problems, attempts have been made to purify monomers and solvents to high purity before polymerization, but to date the improvements in transmittance have not been significant.

U.S. Patent No. 5053480 discloses the use of an aliphatic cyclic dianhydride component in lieu of aromatic dianhydride. Although the prepared solution or film is improved in transparency and color compared to the purification method, the increase in transmittance is limited, and thus high transmittance cannot be satisfied, and moreover, deteriorated thermal and mechanical properties may result.

Furthermore, U.S. Patent Nos. 4595548, 4603061, 4645824, 4895972, 5218083, 5093453, 5218077, 5367046, 5338826, 5986036 and 6232428 and Korean Patent Application Publication No. 2003-0009437 disclose a novel transparent polyimide having improved transmittance and color transparency in the range within which thermal properties are not significantly deteriorated using a connector such as -O-, -SO₂-, CH₂-, etc., a monomer having a bent structure connected to an m-position rather than a p-position, or aromatic dianhydride and aromatic diamine monomers having a substituent such as -CF₃, etc.

However, such a transparent polyimide film is inferior in heat resistance or mechanical properties and thus application thereof is limited in the fields of advanced materials for displays or semiconductors requiring high processing temperatures, and moreover, the above film may tear during the fabrication of displays, undesirably resulting in decreased product yield.

EP 2 660 275 A1 discloses a copolyimide film prepared from 6FDA, BPDA, TFDB and 134APB, with a molar proportion of 134APB of 3 mol-%, referred to the diamine-based monomer. However, it does not disclose that the amount of 134APB and 4BDAF is 10 mol% or less based on a total molar amount of the diamine-based monomer.

### Disclosure

### Technical Problem

Accordingly, the present invention is intended to provide a polyimide resin, which may be greatly improved in heat resistance and mechanical properties upon the formation of a film and is ultimately capable of retaining optical properties.

In addition, the present invention is intended to provide a polyimide film formed of the above polyimide resin and a substrate for a display device.

### Technical Solution

Therefore, the present invention provides a polyimide resin as defined in claim 1.

Preferred embodiments of the present invention are defined in claims 2 to 5.

Another embodiment of the present invention provides a polyimide film as defined in claim 6.

Preferred embodiments of the subject matter of claim 6 are defined in claims 7 to 9.

Still another embodiment of the present invention is defined in claim 10. It provides a substrate for a display device comprising the above polyimide film.

### Advantageous Effects

According to the embodiment of the present invention, a polyimide film having improved heat resistance and mechanical properties, preferably a colorless transparent polyimide film, can be provided, and can thus be efficiently applied to a variety of fields, including semiconductor insulation layers, TFT-LCD insulation layers, passivation layers, liquid crystal alignment layers, optical communication materials, protective layers for solar cells, flexible display substrates.

### Best Mode

Unless otherwise defined, all the technical and scientific terms used herein have the same meanings as those typically understood by those skilled in the art to which the present invention belongs. Generally, the nomenclature used herein is well known in the art and is typical.

As used herein, when any part "includes" any element, this does not mean that other elements are excluded, and such other elements may be further included unless otherwise specifically mentioned.

An aspect of the embodiment of in the present invention addresses a polyimide resin, which includes a unit structure derived from diamine-based monomers and a unit structure derived from dianhydride-based monomers, the dianhydride-based monomers comprise any mixture of 4,4'-hexafluoroisopropylidene diphthalic anhydride (6FDA), 3,3,4,4-diphenylsulfonetetracarboxylic dianhydride (SO₂DPA) and/or oxydiphthalic dianhydride (ODPA), the diamine-based monomer including bis(trifluoromethyl)-1,1'-biphenyl-4,4'-diamine (TFDB); and at least one selected from among 1,3-bis(4-aminophenoxy)benzene and 2,2-bis[4-(4-aminophenoxy)phenyl]hexafluoropropane; wherein the at least one selected from among 1,2-bis(4-aminophenoxy)benzene (134APB) and 2,2-bis[4-(4-aminophenoxy)phenyl]hexafluoropropane (4BDAF) is used in an amount of 10 mol% of less based on a total molar amount of the diamine-based monomer.

Another aspect of the embodiment of the present invention addresses a polyimide film including the polyimide resin and a substrate for a display device including the polyimide film.

Hereinafter, a detailed description of the embodiment in the present invention will be given.

In the case of transparent polyimide, the inherent heat resistance of typical polyimide may be decreased and the mechanical properties thereof may deteriorate due to the monomer introduced to maintain the transparency thereof. In order to improve the heat resistance and mechanical properties of transparent polyimide, a diamine-based monomer, such as para-phenylenediamine (p-PDA), 4,4-oxydianiline (4,4-ODA), dianhydrides (phenyl tetracarboxylic dianhydride (BPDA), pyromellitic dianhydride (PMDA)), etc., may be used, but the extent of improvement thereof is insignificant.

Also, in order to improve the heat resistance and mechanical properties of transparent polyimide, a method of adding a crosslinking agent to react a functional group with the crosslinking agent, a method of using a metal such as Grubbs or an organic/inorganic hybrid catalyst, a UV crosslinking method, and a method of treating the end thereof using a monomer such as alkoxy or silane may be exemplified, but these methods also make it difficult to control the crosslinking thereof. Even upon crosslinking using a monomer having an unsaturated group, an equivalent ratio of diamine and dianhydride cannot be adjusted to 1:1 in order to substitute for the end of a main chain, making it impossible to improve the properties of the polyimide film.

Therefore, the present inventors have carried out intensive and extensive research into solving such problems, resulting in the finding that a diamine-based monomer and a dianhydride-based monomer, containing at least one selected from among an oxy group, a sulfone group and a fluoro group, are included and a diamine-based monomer selected from among 1,3-bis(4-aminophenoxy)benzene (134APB) and 2,2-bis[4-(4-aminophenoxy)phenyl]hexafluoropropane (4BDAF) is included in a predetermined amount, whereby a polyimide film having superior mechanical properties and thermal stability while being colorless and transparent may be provided, thus culminating in the present invention.

Here, the dianhydride-based monomer monomer containing at least one selected from among an oxy group, a sulfone group and a fluoro group comprises any mixture of 3,3,4,4-diphenylsulfonetetracarboxylic dianhydride (SO₂DPA), oxydiphthalic dianhydride (ODPA) and 4,4'-hexafluoroisopropylidene diphthalic anhydride (6FDA); and the diamine-based monomer containing at least one selected from among an oxy group, a sulfone group and a fluoro group comprises bis(trifluoromethyl)-1,1'-biphenyl-4,4'-diamine ((TFDB) and optionally further comprises at least one diamine-based monomer selected from among bis(aminophenyl)hexafluoropropane (33-6F, 44-6F), bis (aminophenyl) sulfone (4DDS, 3DDS), bis(aminohydroxyphenyl)hexafluoropropane (DBOH), oxydianiline (ODA), and bis(aminophenoxy)diphenylsulfone (DBSDA); and mixtures thereof.

Also, in order to improve mechanical properties such as tensile strength, tensile elongation, etc. of the film, the polyimide resin according to the embodiment of the present invention includes, as the diamine-based monomer, at least one selected from among 1,3-bis(4-aminophenoxy)benzene (134APB) and 2,2-bis[4-(4-aminophenoxy)phenyl]hexafluoropropane (4BDAF). The amount thereof is 10 mol% or less and preferably 2 ~ 10 mol% based on the total molar amount of the diamine-based monomer.

If the amount of at least one selected from among 1,3-bis(4-aminophenoxy)benzene and 2,2-bis[4-(4-aminophenoxy)phenyl]hexafluoropropane exceeds 10 mol% based on the total molar amount of the diamine-based monomer, the polymer chain array may become disordered, thus greatly deteriorating optical properties and thermal properties.

Also, the polyimide resin according to the embodiment of the present invention may further include a multifunctional-group-containing monomer to thereby further improve heat resistance and mechanical properties. Here, the amount of the multifunctional-group-containing monomer is 2 mol% or less based on the total molar amount of the dianhydride-based monomer. Given the above amount range, mechanical strength, such as tensile strength, tensile elongation, etc., may become improved due to internal crosslinking of the polymer chain.

The multifunctional-group-containing monomer may include, but is not limited to, at least one selected from among hexamethylbenzene hexacarboxylate (HB), diethyl-4,4-azodibenzoate, trimethyl-1,3,5-benzenetricarboxylate, and trimethyl-1,2,4-benzenetricarboxylate.

The polyimide resin of the embodiment in the present invention is obtained in a manner in which the dianhydride-based monomer and/or the multifunctional-group-containing monomer and the diamine-based monomer are dissolved at an equimolar ratio in an organic solvent and polymerized to give a polyamic acid solution, which is then imidized.

The polymerization conditions are not particularly limited, but the reaction temperature is preferably -20 ~ 80°C and the reaction time is preferably 2 - 48 hr. Furthermore, the reaction is more preferably carried out in an inert atmosphere of argon or nitrogen.

In the embodiment of the present invention, a solvent may be used for solution polymerization of individual monomers, and the solvent is not particularly limited so long as it dissolves polyamic acid. Preferably used is at least one polar solvent selected from among m-cresol, N-methyl-2-pyrrolidone (NMP), dimethylformamide (DMF), dimethylacetamide (DMAc), dimethylsulfoxide (DMSO), acetone, and ethyl acetate. In addition thereto, a low-boiling-point solution such as tetrahydrofuran (THF) or chloroform or a low-absorbency solvent such as γ-butyrolactone may be utilized.

The amount of the solvent is not particularly limited, but the amount of the polymerization solvent (first solvent) is preferably 50 ~ 95 wt%, and more preferably 70 ~ 90 wt%, based on the total amount of the polyamic acid solution, in order to obtain appropriate molecular weight and viscosity of the polyamic acid solution.

A polyimide resin is prepared by imidizing the polyamic acid solution obtained as described above. Here, any process appropriately selected from among known imidization processes may be performed, examples of which include thermal imidization, chemical imidization, or a combination of thermal imidization and chemical imidization.

The polyimide resin thus prepared may have a glass transition temperature of 200 ~ 400°C taking into consideration thermal stability.

Upon the formation of a polyimide film using the polyamic acid solution, the polyamic acid solution may be added with a filler in order to improve various properties such as sliding properties, thermal conductivity, electrical conductivity, and corona resistance of the polyimide film. The filler is not particularly limited, and preferable examples thereof include silica, titanium oxide, lamellar silica, carbon nanotubes, alumina, silicon nitride, boron nitride, calcium hydrogen phosphate, calcium phosphate, mica.

The particle size of the filler may vary depending on the properties of the film to be modified and the kind of filler to be added, and is not particularly limited, but has an average particle size of 0.001 ~ 50 µm, and preferably 0.005 ~ 25 µm, and more preferably 0.01 ~ 10 µm. In this case, it is easy to exhibit modification effects of the polyimide film and good surface properties, conductivity and mechanical properties of the polyimide film may be obtained.

The amount of the filler may vary depending on the properties of the film to be modified and the particle size of the filler, and is not particularly limited. In order to exhibit the properties to be modified while preventing the formation of the bonding structure of the polymer resin from being impeded, the amount of the filler is preferably 0.001 ~ 20 parts by weight and more preferably 0.002 ~ 10 parts by weight based on 100 parts by weight of the polyamic acid solution.

The process of adding the filler is not particularly limited, and includes, for example, adding the filler to the polyamic acid solution before or after polymerization, kneading the filler using a 3-roll mill, a high-speed stirrer or a rotary mixer after completion of polyamic acid polymerization, or mixing a dispersion solution containing the filler with the polyamic acid solution.

The polyimide film of the embodiment in the present invention may be formed from the polyamic acid solution using a known process, for example, by casting the polyamic acid solution on a support and performing an imidization process.

As such, the imidization process may be carried out using thermal imidization, chemical imidization, or a combination of thermal imidization and chemical imidization. Specifically, chemical imidization is performed by adding the polyamic acid solution with a dehydrating agent including an acid anhydride such as acetic anhydride, etc., and an imidization catalyst including a tertiary amine such as isoquinoline, β-picoline, pyridine, etc. In the case where thermal imidization or a combination of thermal imidization and chemical imidization is applied, the heating conditions of the polyamic acid solution may vary depending on the kind of polyamic acid solution, the thickness of the resulting polyimide film, etc.

Specifically describing the formation of a polyimide film using the combination of thermal imidization and chemical imidization, the polyamic acid solution may be added with a dehydrating agent and an imidization catalyst, cast on a support, heated at 80 ~ 200°C and preferably 100 - 180°C to activate the dehydrating agent and the imidization catalyst, and then partially cured and dried, after which the polyamic acid film in a gel phase is stripped from the support, fixed to a frame, and then heated at 200 ~ 400°C for 5 ~ 400 sec, resulting in a desired polyimide film. The gel-phase film may be fixed using a pin- or a clip-type frame. The support may include a glass plate, a piece of aluminum foil, a circulating stainless belt, a stainless drum.

Also in the embodiment of the present invention, a polyamide-imide film may be manufactured from the polyamic acid solution as follows. Specifically, the obtained polyamic acid solution is imidized, after which the imidized solution is added to the second solvent, precipitated, filtered, and dried to give a polyimide resin solid, which is then dissolved in the first solvent to prepare a polyamide-imide solution, followed by a film-forming process, resulting in a desired film.

Imidization of the polyamic acid solution may be carried out using thermal imidization, chemical imidization, or a combination of thermal imidization and chemical imidization, as mentioned above. Specifically describing the combination of thermal imidization and chemical imidization, the obtained polyamic acid solution may be added with a dehydrating agent and an imidization catalyst and heated at 20 ~ 180°C for 1 ~ 12 hr and thus imidized.

The first solvent may be the same as the organic solvent used upon polymerization of the polyamic acid solution, and the second solvent may be a solvent having lower polarity than the first solvent in order to obtain the polyimide resin solid. Specifically, the second solvent may include at least one selected from among water, alcohols, ethers, and ketones. Here, the amount of the second solvent is not particularly limited, but is preferably 5 ~ 20 times the weight of the polyamic acid solution.

The conditions for drying the filtered polyimide resin solid may include a temperature of 50 ~ 120°C and a time period of 30 min ~ 24 hr, taking into consideration the boiling point of the second solvent.

In the subsequent film-forming process, the polyimide solution in which the polyimide resin solid is dissolved is cast on a support and heated for 1 min ~ 8 hr while gradually increasing the temperature thereof in the temperature range of 40 ~ 400°C, thereby obtaining a polyimide film.

In the embodiment of the present invention, the polyimide film thus obtained is further thermally treated to remove thermal hysteresis and residual stress from the film, thereby ensuring stable thermal properties of the film. Here, additional thermal treatment is preferably performed at 100 ~ 500°C for 1 min ~ 3 hr, and the residual volatile content of the film thus thermally treated is 5% or less, and preferably 3% or less.

The thickness of the polyimide film is not particularly limited, but preferably falls in the range from 10 ~ 250 µm, and more preferably from 25 ~ 150 µm.

The polyimide film according to the embodiment of the present invention has a transmittance of 85% or more measured at 550 nm for a film thickness of 50 - 100 µm, a yellow index of 5 or less, and a coefficient of linear thermal expansion (CTE) of 45 ppm/°C or less measured at 50 ~ 250°C in accordance with a thermomechanical analysis method (TMA-method).

Also, the polyimide film according to the embodiment of the present invention may exhibit a tensile strength of 150 MPa or more in accordance with ASTM D882 (for a film thickness of 50 ~ 100 µm).

The polyimide film according to the embodiment of the present invention may exhibit superior thermal stability and mechanical properties while being colorless and transparent and may thus be efficiently applied to a variety of fields, such as semiconductor insulation layers, TFT-LCD insulation layers, passivation layers, liquid crystal alignment layers, optical communication materials, protective layers for solar cells, flexible display substrates.

### Mode for Invention

A better understanding of the embodiment in the present invention may be obtained through the following examples. The following examples 4, 5, 6, 10, 11, and 12 are not according to the invention and are present for illustration purposes only.

### <Example 1>

After a 1 L reactor equipped with a stirrer, a nitrogen injector, a dropping funnel, a temperature controller and a condenser was purged with nitrogen, 556 g of N,N-dimethylacetamide (DMAc) was placed in the reactor and the temperature of the reactor was maintained at 25°C. Thereafter, 62.12 g (0.194 mol) of TFDB was added thereto, dissolved, and stirred for 1 hr, after which 1.75 g (0.006 mol) of 134APB was added thereto and dissolved, and the resulting solution was maintained at 25°C. Also, 28.66 g (0.08 mol) of SO₂DPA was added thereto and stirred for 3 hr to thus completely dissolve SO₂DPA. As such, the temperature of the solution was maintained at 25°C. Also, 53.31 g (0.12 mol) of 6FDA was added thereto and stirred for 24 hr, thus obtaining a polyamic acid solution having a solid content of 20 wt%.

The polyamic acid solution thus obtained was added with 31.64 g of pyridine and 40.8 g of acetic anhydride, stirred for 30 min, further stirred at 80°C for 2 hr, and cooled to room temperature to give a polyimide resin, which was then slowly added to a vessel containing 20 L of methanol and precipitated, after which the precipitated polyimide resin solid was filtered, pulverized and dried at 80°C in a vacuum for 6 hr to give 120 g of a solid powder (having a glass transition temperature of 339°C), which was then dissolved in 680 g of N,N-dimethylacetamide (DMAc), thereby obtaining a 20 wt% solution (viscosity of 1800 poise).

The solution thus obtained was applied onto a stainless steel plate, cast at 300 µm, dried with hot air at 80°C within 30 min, heated to 120°C, and dried within 30 min, after which the film was stripped from the stainless steel plate and fixed to a frame with pins. The film-fixed frame was placed in a hot air oven, gradually heated from 120°C to 300°C at 3 °C/min for 2 hr and then gradually cooled, and the resulting polyimide film was stripped from the frame. The polyimide film thus formed was finally thermally treated at 300°C for 30 min.

### <Example 2>

After a 1 L reactor equipped with a stirrer, a nitrogen injector, a dropping funnel, a temperature controller and a condenser was purged with nitrogen, 551 g of N,N-dimethylacetamide (DMAc) was placed in the reactor, and the temperature of the reactor was maintained at 25°C. Thereafter, 60.84 g (0.19 mol) of TFDB was added thereto, dissolved, and stirred for 1 hr, after which 2.92 g (0.01 mol) of 134APB was added thereto and dissolved, and the resulting solution was maintained at 25°C. Also, 28.66 g (0.08 mol) of SO₂DPA was added thereto and stirred for 3 hr to thus completely dissolve SO₂DPA. As such, the temperature of the solution was maintained at 25°C. Also, 53.31 g (0.12 mol) of 6FDA was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 330°C) and a polyimide film.

### <Example 3>

After a 1 L reactor equipped with a stirrer, a nitrogen injector, a dropping funnel, a temperature controller and a condenser was purged with nitrogen, 537 g of N,N-dimethylacetamide (DMAc) was placed in the reactor and the temperature of the reactor was maintained at 25°C. Thereafter, 57.64 g (0.18 mol) of TFDB was added thereto, dissolved, and stirred for 1 hr, after which 5.85 g (0.02 mol) of 134APB was added thereto and dissolved, and the resulting solution was maintained at 25°C. Also, 28.66 g (0.08 mol) of SO₂DPA was added thereto and stirred for 3 hr to thus completely dissolve SO₂DPA. Here, the temperature of the solution was maintained at 25°C. Also, 53.31 g (0.12 mol) of 6FDA was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 317°C) and a polyimide film.

### <Example 4>

After a 1 L reactor equipped with a stirrer, a nitrogen injector, a dropping funnel, a temperature controller and a condenser was purged with nitrogen, 537 g of N,N-dimethylacetamide (DMAc) was placed in the reactor and the temperature of the reactor was maintained at 25°C. Thereafter, 54.44 g (0.17 mol) of TFDB was added thereto, dissolved, and stirred for 1 hr, after which 8.78 g (0.03 mol) of 134APB was added thereto and dissolved, and the resulting solution was maintained at 25°C. Also, 28.66 g (0.08 mol) of SO₂DPA was added thereto and stirred for 3 hr to thus completely dissolve SO₂DPA. Here, the temperature of the solution was maintained at 25°C. Also, 53.31 g (0.12 mol) of 6FDA was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 310°C) and a polyimide film.

### <Example 5>

After a 1 L reactor equipped with a stirrer, a nitrogen injector, a dropping funnel, a temperature controller and a condenser was purged with nitrogen, 537 g of N,N-dimethylacetamide (DMAc) was placed in the reactor and the temperature of the reactor was maintained at 25°C. Thereafter, 51.24 g (0.16 mol) of TFDB was added thereto, dissolved, and stirred for 1 hr, after which 11.7 g (0.04 mol) of 134APB was added thereto and dissolved, and the resulting solution was maintained at 25°C. Also, 28.66 g (0.08 mol) of SO₂DPA was added thereto and stirred for 3 hr to thus completely dissolve SO₂DPA. Here, the temperature of the solution was maintained at 25°C. Also, 53.31 g (0.12 mol) of 6FDA was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 307°C) and a polyimide film.

### <Example 6>

After a 1 L reactor equipped with a stirrer, a nitrogen injector, a dropping funnel, a temperature controller and a condenser was purged with nitrogen, 537 g of N,N-dimethylacetamide (DMAc) was placed in the reactor and the temperature of the reactor was maintained at 25°C. Thereafter, 44.83 g (0.14 mol) of TFDB was added thereto, dissolved, and stirred for 1 hr, after which 17.55 g (0.06 mol) of 134APB was added thereto and dissolved, and the resulting solution was maintained at 25°C. Also, 28.66 g (0.08 mol) of SO₂DPA was added thereto and stirred for 3 hr to thus completely dissolve SO₂DPA. Here, the temperature of the solution was maintained at 25°C. Also, 53.31 g (0.12 mol) of 6FDA was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 302°C) and a polyimide film.

### <Example 7>

After a 1 L reactor equipped with a stirrer, a nitrogen injector, a dropping funnel, a temperature controller and a condenser was purged with nitrogen, 568 g of N,N-dimethylacetamide (DMAc) was placed in the reactor, and the temperature of the reactor was maintained at 25°C. Thereafter, 62.12 g (0.194 mol) of TFDB was added thereto, dissolved, and stirred for 1 hr, after which 3.11 g (0.006 mol) of 4BDAF was added thereto and dissolved, and the resulting solution was maintained at 25°C. Also, 28.66 g (0.08 mol) of SO₂DPA was added thereto and stirred for 3 hr to thus completely dissolve SO₂DPA. Here, the temperature of the solution was maintained at 25°C. Also, 53.31 g (0.12 mol) of 6FDA was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 342°C) and a polyimide film.

### <Example 8>

After a 1 L reactor equipped with a stirrer, a nitrogen injector, a dropping funnel, a temperature controller and a condenser was purged with nitrogen, 571 g of N,N-dimethylacetamide (DMAc) was placed in the reactor and the temperature of the reactor was maintained at 25°C. Thereafter, 60.84 g (0.19 mol) of TFDB was added thereto, dissolved, and stirred for 1 hr, after which 5.18 g (0.01 mol) of 4BDAF was added thereto and dissolved, and the resulting solution was maintained at 25°C. Also, 28.66 g (0.08 mol) of SO₂DPA was added thereto and stirred for 3 hr to thus completely dissolve SO₂DPA. Here, the temperature of the solution was maintained at 25°C. Also, 53.31 g (0.12 mol) of 6FDA was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 336°C) and a polyimide film.

### <Example 9>

After a 1 L reactor equipped with a stirrer, a nitrogen injector, a dropping funnel, a temperature controller and a condenser was purged with nitrogen, 579 g of N,N-dimethylacetamide (DMAc) was placed in the reactor and the temperature of the reactor was maintained at 25°C. Thereafter, 57.64 g (0.18 mol) of TFDB was added thereto, dissolved, and stirred for 1 hr, after which 10.37 g (0.02 mol) of 4BDAF was added thereto and dissolved, and the resulting solution was maintained at 25°C. Also, 28.66 g (0.08 mol) of SO₂DPA was added thereto and stirred for 3 hr to thus completely dissolve SO₂DPA. Here, the temperature of the solution was maintained at 25°C. Also, 53.31 g (0.12 mol) of 6FDA was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 329°C) and a polyimide film.

### <Example 10>

After a 1 L reactor equipped with a stirrer, a nitrogen injector, a dropping funnel, a temperature controller and a condenser was purged with nitrogen, 579 g of N,N-dimethylacetamide (DMAc) was placed in the reactor and the temperature of the reactor was maintained at 25°C. Thereafter, 54.44 g (0.17 mol) of TFDB was added thereto, dissolved, and stirred for 1 hr, after which 15.55 g (0.03 mol) of 4BDAF was added thereto and dissolved, and the resulting solution was maintained at 25°C. Also, 28.66 g (0.08 mol) of SO₂DPA was added thereto and stirred for 3 hr to thus completely dissolve SO₂DPA. Here, the temperature of the solution was maintained at 25°C. Also, 53.31 g (0.12 mol) of 6FDA was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 327°C) and a polyimide film.

### <Example 11>

After a 1 L reactor equipped with a stirrer, a nitrogen injector, a dropping funnel, a temperature controller and a condenser was purged with nitrogen, 579 g of N,N-dimethylacetamide (DMAc) was placed in the reactor, and the temperature of the reactor was maintained at 25°C. Thereafter, 51.24 g (0.16 mol) of TFDB was added thereto, dissolved, and stirred for 1 hr, after which 20.73 g (0.04 mol) of 4BDAF was added thereto and dissolved, and the resulting solution was maintained at 25°C. Also, 28.66 g (0.08 mol) of SO₂DPA was added thereto and stirred for 3 hr to thus completely dissolve SO₂DPA. Here, the temperature of the solution was maintained at 25°C. Also, 53.31 g (0.12 mol) of 6FDA was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 323°C) and a polyimide film.

### <Example 12>

After a 1 L reactor equipped with a stirrer, a nitrogen injector, a dropping funnel, a temperature controller and a condenser was purged with nitrogen, 579 g of N,N-dimethylacetamide (DMAc) was placed in the reactor, and the temperature of the reactor was maintained at 25°C. Thereafter, 44.83 g (0.14 mol) of TFDB was added thereto, dissolved, and stirred for 1 hr, after which 31.10 g (0.06 mol) of 4BDAF was added thereto and dissolved, and the resulting solution was maintained at 25°C. Also, 28.66 g (0.08 mol) of SO₂DPA was added thereto and stirred for 3 hr to thus completely dissolve SO₂DPA. Here, the temperature of the solution was maintained at 25°C. Also, 53.31 g (0.12 mol) of 6FDA was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 315°C) and a polyimide film.

### <Example 13>

After a 1 L reactor equipped with a stirrer, a nitrogen injector, a dropping funnel, a temperature controller and a condenser was purged with nitrogen, 551 g of N,N-dimethylacetamide (DMAc) was placed in the reactor and the temperature of the reactor was maintained at 25°C. Thereafter, 60.84 g (0.19 mol) of TFDB was added thereto, dissolved, and stirred for 1 hr, after which 2.92 g (0.01 mol) of 134APB was added thereto and dissolved, and the resulting solution was maintained at 25°C. Also, 28.66 g (0.08 mol) of SO₂DPA was added thereto and stirred for 3 hr to thus completely dissolve SO₂DPA. Here, the temperature of the solution was maintained at 25°C. Also, 51.53 g (0.116 mol) of 6FDA was added thereto and stirred for 3 hr to thus completely dissolve 6FDA, and 1.71 g (0.004 mol) of hexamethylbenzene hexacarboxylate (HB) was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 330°C) and a polyimide film.

### <Example 14>

After a 1 L reactor equipped with a stirrer, a nitrogen injector, a dropping funnel, a temperature controller and a condenser was purged with nitrogen, 571 g of N,N-dimethylacetamide (DMAc) was placed in the reactor and the temperature of the reactor was maintained at 25°C. Thereafter, 60.84 g (0.19 mol) of TFDB was added thereto, dissolved, and stirred for 1 hr, after which 5.18 g (0.01 mol) of 4BDAF was added thereto and dissolved, and the resulting solution was maintained at 25°C. Also, 28.66 g (0.08 mol) of SO₂DPA was added thereto and stirred for 3 hr to thus completely dissolve SO₂DPA. Here, the temperature of the solution was maintained at 25°C. Also, 51.53 g (0.116 mol) of 6FDA was added thereto and stirred for 3 hr to thus completely dissolve 6FDA, and 1.71 g (0.004 mol) of hexamethylbenzene hexacarboxylate (HB) was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 335°C) and a polyimide film.

### <Comparative Example 1>

After a 1 L reactor equipped with a stirrer, a nitrogen injector, a dropping funnel, a temperature controller and a condenser was purged with nitrogen, 563 g of N,N-dimethylacetamide (DMAc) was placed in the reactor and the temperature of the reactor was maintained at 25°C. Thereafter, 64.05 g (0.2 mol) of TFDB was added thereto, dissolved, and stirred for 1 hr, after which 28.66 g (0.08 mol) of SO₂DPA was added thereto and stirred for 3 hr to thus completely dissolve SO₂DPA. Here, the temperature of the solution was maintained at 25°C. Also, 53.31 g (0.12 mol) of 6FDA was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 340°C) and a polyimide film.

### <Comparative Example 2>

After a 1 L reactor equipped with a stirrer, a nitrogen injector, a dropping funnel, a temperature controller and a condenser was purged with nitrogen, 541 g of N,N-dimethylacetamide (DMAc) was placed in the reactor and the temperature of the reactor was maintained at 25°C. Thereafter, 58.46 g (0.2 mol) of 134APB was added thereto, dissolved, and stirred for 1 hr, after which 28.66 g (0.08 mol) of SO₂DPA was added thereto and stirred for 3 hr to thus completely dissolve SO₂DPA. Here, the temperature of the solution was maintained at 25°C. Also, 53.31 g (0.12 mol) of 6FDA was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 280°C) and a polyimide film.

### <Comparative Example 3>

After a 1 L reactor equipped with a stirrer, a nitrogen injector, a dropping funnel, a temperature controller and a condenser was purged with nitrogen, 722 g of N,N-dimethylacetamide (DMAc) was placed in the reactor and the temperature of the reactor was maintained at 25°C. Thereafter, 103.69 g (0.2 mol) of 4BDAF was added thereto, dissolved, and stirred for 1 hr, after which 28.66 g (0.08 mol) of SO₂DPA was added thereto and stirred for 3 hr to thus completely dissolve SO₂DPA. Here, the temperature of the solution was maintained at 25°C. Also, 53.31 g (0.12 mol) of 6FDA was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 302°C) and a polyimide film.

### <Comparative Example 4>

After a 1 L reactor equipped with a stirrer, a nitrogen injector, a dropping funnel, a temperature controller and a condenser was purged with nitrogen, 611 g of N,N-dimethylacetamide (DMAc) was placed in the reactor and the temperature of the reactor was maintained at 25°C. Thereafter, 64.046 g (0.2 mol) of TFDB was added thereto, dissolved, and stirred for 1 hr, after which 87.07 g (0.196 mol) of 6FDA was added thereto and stirred for 3 hr to thus completely dissolve 6FDA. Here, the temperature of the solution was maintained at 25°C. Also, 1.71 g (0.004 mol) of hexamethylbenzene hexacarboxylate was added thereto and stirred for 24 hr, thus obtaining a polyamic acid solution having a solid content of 20 wt%.

The polyamic acid solution thus obtained was added with 31.64 g of pyridine and 40.8 g of acetic anhydride, and subsequent procedures were performed in the same manner as in Example 1, thus manufacturing a polyimide resin solid powder (having a glass transition temperature of 350°C) and a polyimide film.

### <Evaluation of properties>

### (1) Transmittance

The transmittance of the film of each of Examples and Comparative Examples was measured at 550 nm using a UV spectrophotometer (Cary100, available from Varian).

### (2) Yellow index

The yellow index was measured in accordance with ASTM E313 using a UV spectrophotometer (Cary100, available from Varian).

### (3) Coefficient of Thermal Expansion (CTE)

The CTE was measured three times in a first run, second run, and third run at 50 ~ 250°C using a TMA (Diamond TMA, available from PerkinElmer) through a TMA-method, and the values of the second run and the third run were measured, excluding the value of the first run, and the two values were averaged when the deviation thereof was within 5%. Here, the CTE measurement load was 0.1 N, and stabilization at 40°C and heating rate at 10 °C/min were set, and the polyimide film sample was 4 mm × 25 mm in size.

### (4) Measurement of tensile strength and tensile elongation

The tensile strength (MPa) and tensile elongation (%) were measured at a tensile speed of 50 mm/min in accordance with ASTM D882.

**[Table 1]**

| | Component | Molar ratio | Thick. (µm) | Transmittanc e (%) | Yello w index | CTE (ppm/°C ) | Tensile strengt h (MPa) | Tensile elongatio n (%) |
|---|---|---|---|---|---|---|---|---|
| Ex.1 | 6FDA:SO₂DPA/TFDB:134APB | 60:40/97:3 | 80 | 89.4 | 4.0 | 40.9 | 152 | 15 |
| Ex.2 | 6FDA:SO₂DPA/TFDB:134APB | 60:40/95:5 | 78 | 87.6 | 4.2 | 41.2 | 157 | 17 |
| Ex.3 | 6FDA:SO₂DPA/TFDB:134APB | 60:40/90:10 | 81 | 88.3 | 4.6 | 41.9 | 165 | 18 |
| Ex.4 | 6FDA:SO₂DPA/TFDB:134APB | 60:40/85:15 | 79 | 87.4 | 5.9 | 42.7 | 160 | 19 |
| Ex.5 | 6FDA:SO₂DPA/TFDB:134APB | 60:40/80:20 | 78 | 87.2 | 6.9 | 43.5 | 155 | 20 |
| Ex. 6 | 6FDA:SO₂DPA/TFDB:134APB | 60:40/70:30 | 80 | 87.2 | 9.4 | 43.9 | 159 | 22 |
| Ex. 7 | 6FDA:SO₂DPA/TFDB:4BDAF | 60:40/97:3 | 79 | 87.1 | 4.2 | 42.3 | 161 | 16 |
| Ex. 8 | 6FDA:SO₂DPA/TFDB:4BDAF | 60:40/95:5 | 75 | 86.4 | 4.5 | 41.2 | 167 | 16 |
| Ex. 9 | 6FDA:SO₂DPA/TFDB:4BDAF | 60:40/90:10 | 82 | 90.2 | 4.8 | 43.9 | 178 | 18 |
| Ex. 10 | 6FDA:SO₂DPA/TFDB:4BDAF | 60:40/85:15 | 76 | 87.2 | 6.1 | 44.8 | 172 | 18 |
| Ex. 11 | 6FDA:SO₂DPA/TFDB:4BDAF | 60:40/80:20 | 78 | 87.1 | 7.2 | 45.9 | 167 | 19 |
| Ex. 12 | 6FDA:SO₂DPA/TFDB:4BDAF | 60:40/70:30 | 77 | 87.3 | 10.5 | 46.0 | 165 | 19 |
| Ex. 13 | 6FDA:SO₂DPA:HB/TFDB:134AP B | 58:40:2/95:5 | 77 | 87.3 | 4.7 | 44.2 | 170 | 18 |
| Ex. 14 | 6FDA:SO₂DPA:HB/TFDB:4BDAF | 58:40:2/95:5 | 80 | 91 | 4.9 | 44.6 | 181 | 17 |
| Comp. Ex. 1 | 6FDA:SO₂DPA/TFDB | 60:40/100 | 81 | 89.7 | 3.8 | 40.5 | 136 | 11 |
| Comp. Ex. 2 | 6FDA:SO₂DPA/134APB | 60:40/100 | 79 | 88.2 | 11.5 | 44.9 | 158 | 19 |
| Comp. Ex. 3 | 6FDA:SO₂DPA/4BDAF | 60:40/100 | 78 | 87.4 | 14.9 | 46.3 | 162 | 17 |
| Comp. Ex. 4 | 6FDA:HB/TFDB | 98:2/100 | 83 | 90.2 | 2.0 | 55.1 | 123 | 12 |

As is apparent from Table 1, Examples 1 to 14 exhibited superior mechanical properties and thermal stability compared to Comparative Examples 1 and 4. In particular, when the amount of 134APB or 4BDAF fell in the predetermined range, colorlessness and transparency, which are desirable optical properties, were also superb.

## Claims

1. A polyimide resin, which is an imidized product of polyamic acid in which a polymerization composition comprising diamine-based monomers and dianhydride-based monomers is copolymerized,
wherein the diamine-based monomers comprise:
bis(trifluoromethyl)-I,I'-biphenyl-4,4'-diamine (TFDB); and
at least one selected from among 1,3-bis(4-aminophenoxy)benzene (134APB) and 2,2-bis[4-(4-aminophenoxy)phenyl]hexafluoropropane (4BDAF),
the dianhydride-based monomers comprise any mixture of 4,4'-hexafluoroisopropylidene diphthalic anhydride (6FDA), 3,3,4,4-diphenylsulfonetetracarboxylic dianhydride (SO₂DPA) and/or oxydiphthalic dianhydride (ODPA), and
wherein the at least one selected from among 1,3-bis(4-aminophenoxy)benzene (134APB) and 2,2-bis[4-(4-aminophenoxy)phenyl]hexafluoropropane (4BDAF) is used in an amount of 10 mol% or less based on a total molar amount of the diamine-based monomer.

2. The polyimide resin of claim 1, wherein the at least one selected from among 1,3-bis(4-aminophenoxy)benzene (134APB) and 2,2-bis[4-(4-aminophenoxy)phenyl] hexafluoropropane (4BDAF) is used in an amount of 2 to 10 mol% based on a total molar amount of the diamine-based monomer.

3. The polyimide resin of claim 1, wherein the diamine-based monomer further comprise at least one selected from among bis (aminophenyl)hexafluoropropane (33-6F, 44-6F), bis (aminophenyl)sulfone (4DDS, 3DDS), bis(aminohydroxyphenyl)hexafluoropropane (DBOH), oxydianiline (ODA) and bis(aminophenoxy)diphenylsulfone (DBSDA).

4. The polyimide resin of claim 1, wherein the polyimide resin is an imidized product of polyamic acid in which the polymerization composition further comprising a multifunctional-group-containing monomer is copolymerized,
wherein the multifunctional-group-containing monomer is at least one selected from the group consisting of hexamethylbenzene hexacarboxylate, diethyl-4,4-azodibenzoate, trimethyl-1,3,5-benzenetricarboxylate, and trimethyl-1,2,4-benzenetricarboxylate.

5. The polyimide resin of claim 4, wherein the multifunctional-group-containing monomer is used in an amount of 2 mol% or less based on a total molar amount of the dianhydride-based monomer.

6. A polyimide film, comprising the polyimide resin of claim 1.

7. The polyimide film of claim 6, wherein the polyimide film has a transmittance of 85% or more at 550 µm, measured using a UV spectrophotometer, for a film thickness of 50 ~ 100 µm and an average coefficient of linear thermal expansion (CTE) of 45 ppm/°C or less at 50 ~ 250°C.

8. The polyimide film of claim 6, wherein the polyimide film has a yellow index of 5 or less for a film thickness of 50 ~ 100 µm.

9. The polyimide film of claim 6, wherein the polyimide film has a tensile strength of 150 MPa or more measured in accordance with ASTM D882 (for a film thickness of 50 ~ 100 µm).

10. A substrate for a display device, comprising the polyimide film of claim 6.

## Patentansprüche

1. Polyimidharz, welches ein imidiertes Produkt von Polyamidsäure ist, in dem eine Polymerisationszusammensetzung, die Monomere auf Diaminbasis und Monomere auf Dianhydridbasis umfasst, copolymerisiert wird,
wobei die Monomere auf Diaminbasis umfassen:
Bis(trifluormethyl)-1,1'-biphenyl-4,4'-diamin (TFDB); und
mindestens eines, ausgewählt aus 1,3-Bis(4-aminophenoxy)benzol (134APB) und 2,2-Bis[4-(4-aminophenoxy)phenyl]hexafluorpropan (4BDAF),
die Monomere auf Dianhydridbasis eine beliebige Mischung aus 4,4'-Hexafluorisopropylidendiphthalsäureanhydrid (6FDA), 3,3,4,4-Diphenylsulfontetracarbonsäuredianhydrid (SO₂DPA) und/oder Oxydiphthalsäuredianhydrid (ODPA) umfassen, und
wobei das mindestens eine, ausgewählt aus 1,3-Bis(4-aminophenoxy)benzol (134APB) und 2,2-Bis[4-(4-aminophenoxy)phenyl]hexafluorpropan (4BDAF), in einer Menge von 10 Mol-% oder weniger, bezogen auf eine molare Gesamtmenge des Monomers auf Diaminbasis, verwendet wird.

2. Polyimidharz nach Anspruch 1, wobei das mindestens eine, ausgewählt aus 1,3-Bis(4-aminophenoxy)benzol (134APB) und 2,2-Bis[4-(4-aminophenoxy)phenyl]hexafluorpropan (4BDAF), in einer Menge von 2 bis 10 Mol-%, bezogen auf eine molare Gesamtmenge des Monomers auf Diaminbasis, verwendet wird.

3. Polyimidharz nach Anspruch 1, wobei das Monomer auf Diaminbasis weiterhin mindestens eines, ausgewählt aus Bis(aminophenyl)hexafluorpropan (33-6F, 44-6F), Bis(aminophenyl)sulfon (4DDS, 3DDS), Bis(aminohydroxyphenyl)hexafluorpropan (DBOH), Oxydianilin (ODA) und Bis(aminophenoxy)diphenylsulfon (DBSDA), umfasst.

4. Polyimidharz nach Anspruch 1, wobei das Polyimidharz ein imidiertes Produkt von Polyamidsäure ist, in dem die Polymerisationszusammensetzung, die weiterhin ein Monomer, das eine multifunktionelle Gruppe enthält, umfasst, copolymerisiert wird, wobei das Monomer, das eine multifunktionelle Gruppe enthält, mindestens eines ist, ausgewählt aus der Gruppe bestehend aus Hexamethylbenzolhexacarboxylat, Diethyl-4,4-azodibenzoat, Trimethyl-1,3,5-benzoltricarboxylat und Trimethyl-1,2,4-benzoltricarboxylat.

5. Polyimidharz nach Anspruch 4, wobei das Monomer, das eine multifunktionelle Gruppe enthält, in einer Menge von 2 Mol-% oder weniger, bezogen auf die molare Gesamtmenge des Monomers auf Dianhydridbasis, verwendet wird.

6. Polyimidfolie, umfassend das Polyimidharz nach Anspruch 1.

7. Polyimidfolie nach Anspruch 6, wobei die Polyimidfolie eine Durchlässigkeit von 85% oder mehr bei 550 nm, gemessen mit einem UV-Spektrophotometer, für eine Foliendicke von 50 ~ 100 µm und einen durchschnittlichen linearen Wärmeausdehnungskoeffizienten (CTE) von 45 ppm/°C oder weniger bei 50 ~ 250°C aufweist.

8. Polyimidfolie nach Anspruch 6, wobei die Polyimidfolie einen Gelbindex von 5 oder weniger bei einer Foliendicke von 50 ~ 100 µm aufweist.

9. Polyimidfolie nach Anspruch 6, wobei die Polyimidfolie eine Zugfestigkeit von 150 MPa oder mehr aufweist, gemessen nach ASTM D882 (bei einer Foliendicke von 50 ~ 100 µm).

10. Substrat für eine Anzeigevorrichtung, umfassend die Polyimidfolie nach Anspruch 6.

## Revendications

1. Résine de polyimide, qui est un produit imidisé d'acide polyamique dans lequel une composition de polymérisation comportant des monomères à base de diamine et des monomères à base de dianhydride est copolymérisée,
dans laquelle les monomères à base de diamine comportent :
de la bis(trifluorométhyl)-1,1'-biphényl-4,4'-diamine (TFDB) ; et
au moins un élément choisi parmi 1,3-bis(4-aminophénoxy)benzène (134APB) et 2,2-bis[4-(4-aminophénoxy)phényl]hexafluoropropane (4BDAF),
les monomères à base de dianhydride comportent un mélange quelconque d'anhydride 4,4'-hexafluoroisopropylidène diphthalique (6FDA), de dianhydride 3,3,4,4-diphénylsulfonetétracarboxylique (SO₂DPA) et/ou de dianhydride oxydiphthalique (ODPA), et
dans laquelle le au moins élément choisi parmi 1,3-bis(4-aminophénoxy)benzène (134APB) et 2,2-bis[4-(4-aminophénoxy)phényl]hexafluoropropane (4BDAF) est utilisé en une quantité de 10 % en moles ou moins basée sur une quantité molaire totale du monomère à base de diamine.

2. Résine de polyimide selon la revendication 1, dans laquelle le au moins élément choisi parmi 1,3-bis(4-aminophénoxy)benzène (134APB) et 2,2-bis[4-(4-aminophénoxy)phényl]hexafluoropropane (4BDAF) est utilisé en une quantité de 2 à 10 % en moles ou moins basée sur une quantité molaire totale du monomère à base de diamine.

3. Résine de polyimide selon la revendication 1, dans laquelle le monomère à base de diamine comporte en outre au moins un élément choisi parmi bis(aminophényl)hexafluoropropane (33-6F, 44-6F), bis(aminophényl)sulfone (4DDS, 3DDS), bis(aminohydroxyphényl)hexafluoropropane (DBOH), oxydianiline (ODA) et bis(aminophénoxy)diphénylsulfone (DBSDA).

4. Résine de polyimide selon la revendication 1, dans laquelle la résine de polyimide est un produit imidisé d'acide polyamique dans lequel la composition de polymérisation comportant en outre un monomère contenant des groupes multifonctionnels, est copolymérisée,
dans laquelle le monomère contenant des groupes multifonctionnels est au moins un élément choisi parmi le groupe constitué d'hexaméthylbenzène hexacarboxylate, de diéthyl-4,4-azodibenzoate, de triméthyl-1,3,5-benzènetricarboxylate et de triméthyl-1,2,4-benzènetricarboxylate.

5. Résine de polyimide selon la revendication 4, dans laquelle le monomère contenant des groupes multifonctionnels est utilisé en une quantité de 2 % en moles ou moins basée sur une quantité molaire totale du monomère à base de dianhydride.

6. Film de polyimide, comportant la résine de polyimide de la revendication 1.

7. Film de polyimide selon la revendication 6, dans lequel le film de polyimide a une transmittance de 85 % ou plus à 550 nm, mesurée en utilisant un spectrophotomètre UV, pour une épaisseur de film de 50 à 100 µm et un coefficient moyen de dilatation thermique linéaire (CTE) de 45 ppm/°C ou moins de 50 à 250 °C.

8. Film de polyimide selon la revendication 6, dans lequel le film de polyimide a un indice de jaune de 5 ou moins pour une épaisseur de film de 50 à 100 pm.

9. Film de polyimide selon la revendication 6, dans lequel le film de polyimide a une résistance à la traction de 150 MPa ou plus, mesurée conformément à la norme ASTM D882 (pour une épaisseur de film de 50 à 100 µm).

10. Substrat pour un dispositif d'affichage, comportant le film de polyimide de la revendication 6.
